(19) Europäisches Patentamt
European Patent Office
Office européen des brevets

(11)  **EP 2 697 886 B1**

(12)  **FASCICULE DE BREVET EUROPEEN**

(45) Date de publication et mention
de la délivrance du brevet:
**03.06.2015  Bulletin 2015/23**

(51) Int Cl.:
*H02J 7/02* (2006.01)        *H02M 1/42* (2007.01)
*B60L 11/18* (2006.01)

(21) Numéro de dépôt: **12722414.5**

(22) Date de dépôt: **12.04.2012**

(86) Numéro de dépôt international:
**PCT/FR2012/050806**

(87) Numéro de publication internationale:
**WO 2012/140374 (18.10.2012 Gazette 2012/42)**

(54) **DISPOSITIF DE CHARGE D'UNE BATTERIE D'UN VÉHICULE AUTOMOBILE À PARTIR D' UN RÉSEAU D' ALIMENTATION MONOPHASÉ, ET PROCÉDÉ DE COMMANDE DU DISPOSITIF**

VORRICHTUNG ZUM LADEN EINER BATTERIE EINES KRAFTFAHRZEUGS AUF DER BASIS EINES EINPHASIGEN STROMNETZES UND VERFAHREN ZUR STEUERUNG DER VORRICHTUNG

DEVICE FOR CHARGING A BATTERY OF A MOTOR VEHICLE ON THE BASIS OF A SINGLE-PHASE POWER SUPPLY NETWORK, AND METHOD OF CONTROLLING THE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.04.2011  FR 1101177**

(43) Date de publication de la demande:
**19.02.2014  Bulletin 2014/08**

(73) Titulaire: **Renault S.A.S.**
**92100 Boulogne-Billancourt (FR)**

(72) Inventeurs:
• **GATI, Mehdi**
**92330 Sceaux (FR)**
• **KVIESKA, Pedro**
**78000 Versailles (FR)**
• **KETFI-CHERIF, Ahmed**
**78990 Elancourt (FR)**

(56) Documents cités:
**FR-A1- 2 943 188        FR-A3- 2 937 803
US-A1- 2007 153 560**

**Description**

L'invention concerne un dispositif de charge de batterie haute tension, notamment d'un véhicule automobile à traction électrique, à partir d'un réseau d'alimentation monophasé.

Dans des systèmes de recharge de batterie à haute tension, la puissance électrique du réseau est amenée à la batterie successivement au travers de deux convertisseurs : un abaisseur de tension (« buck ») et un élévateur de tension (« boost »). Ces deux convertisseurs permettent respectivement d'abaisser et d'élever le rapport de tension entre leur borne de sortie et leur borne d'entrée, en ouvrant et en fermant successivement une série d'interrupteurs, à une fréquence qui est commandée en fonction du courant de sortie, et/ou de la tension de sortie souhaitée.

De tels systèmes de recharge sont par exemple décrits dans la demande de brevet FR 2 943 188, qui porte sur un système de recharge embarqué pour véhicule automobile, permettant un rechargement à partir d'un circuit triphasé ou monophasé d'une batterie du véhicule, le circuit de recharge intégrant les bobines d'une machine électrique qui assure par ailleurs d'autres fonctions comme la génération de courant ou la propulsion du véhicule.

Un autre système de charge est décrit dans le document US20070153560. Ce système de charge comprend en cascade un étage de filtrage d'entrée, un étage redresseur, un étage boost et un étage abaisseur de tension.

Le document FR2937803 décrit un système de charge pour batterie de véhicule électrique, comprenant un étage redresseur suivi d'un étage de filtrage et d'un hacheur/élévateur reprenant des éléments de la chaîne de traction, notamment l'onduleur de traction et les bobinages statoriques du moteur électrique de traction du véhicule. L'étage redresseur est éventuellement suivi d'un étage abaisseur/élévateur dans le cas d'un réseau d'alimentation 220V.

Le hachage du courant tiré du réseau d'alimentation induit des composantes à haute fréquence dans le courant prélevé, c'est-à-dire des harmoniques d'ordre supérieur au fondamental du réseau de distribution qui est classiquement à 50 Hz.

Le distributeur d'électricité imposant une norme sur les harmoniques du courant prélevé, un tel système de recharge comporte également un filtre de type RLC (Résistif-Inductif-Capacitif) à l'entrée de l'abaisseur de tension. Ce filtre induit un déphasage entre le courant et la tension prélevés sur le réseau. Ce déphasage implique une puissance réactive transitant par le réseau, mais non prélevée par l'utilisateur, et que l'on cherche également à minimiser.

Par ailleurs, les réseaux d'alimentation domestiques sont principalement des réseaux d'alimentation monophasés. Un véhicule comprenant un dispositif de recharge de batterie à partir d'une alimentation monophasée peut ainsi être rechargé sur un réseau d'alimentation domestique, par exemple, dans le garage ou le parking d'un particulier.

Une recharge à partir d'un réseau d'alimentation monophasé présente quelques spécificités. En fonction de sa topologie, il n'est pas possible de mettre en phase le courant d'entrée à la tension du réseau. Par ailleurs, lorsque la tension sinusoïdale d'entrée avoisine zéro, le système devient momentanément non commandable, ce qui n'est pas très gênant lorsque l'inductance de stockage de la machine électrique entre l'abaisseur de tension et l'élévateur de tension est élevée, car le courant dans l'inductance n'a alors pas le temps de chuter, mais présente l'inconvénient d'un volume important de cette inductance.

De plus, pour que le flux de puissance puisse s'établir de façon continue, un courant non nul doit circuler dans l'inductance de stockage de la machine électrique entre l'abaisseur de tension et l'élévateur de tension.

L'objectif de l'invention est de proposer un dispositif de régulation de l'abaisseur de tension et de l'élévateur de tension d'un tel dispositif de recharge, qui permette, malgré la présence d'un filtre RLC en entrée du dispositif, de garder un déphasage réduit entre le courant et la tension prélevés sur le réseau d'alimentation monophasé.

Un autre but de l'invention est de proposer un dispositif de recharge embarqué pour un véhicule automobile, adapté pour pouvoir être connecté à un réseau d'alimentation monophasé extérieur, et intégrant dans son circuit le bobinage d'une machine électrique du véhicule.

Selon un aspect, il est proposé, dans un mode de réalisation, un dispositif de charge d'une batterie, notamment d'une batterie d'un véhicule automobile à traction électrique, à partir d'un réseau d'alimentation monophasé, comprenant un étage de filtrage destiné à être raccordé au réseau monophasé, un étage abaisseur de tension raccordé à l'étage de filtrage, un étage élévateur de tension destiné à être raccordé à la batterie et couplé à l'étage abaisseur de tension via un composant inductif tel qu'une bobine d'induction, une unité de régulation apte à imposer des rapports cycliques de hachage à l'étage abaisseur de tension et à l'étage élévateur de tension.

Selon une caractéristique générale, l'unité de régulation comprend des moyens de compensation du déphasage entre le courant d'entrée de l'étage abaisseur de tension et la tension d'entrée de l'étage abaisseur de tension.

Avantageusement, l'unité de régulation comprend un premier module de contrôle apte à déterminer en boucle ouverte un rapport cyclique de hachage de l'étage abaisseur de tension en fonction de la tension du réseau d'alimentation monophasé, d'une puissance de consigne, et de l'intensité du courant traversant la bobine d'induction, pour compenser le déphasage entre le courant d'entrée de l'étage abaisseur de tension et la tension d'entrée de l'étage abaisseur de tension, et asservir la puissance reçue par la batterie à la puissance de consigne.

Le premier module de contrôle peut avantageusement comprendre une cartographie délivrant l'amplitude du courant d'entrée de l'étage abaisseur de tension en fonction de l'amplitude de la tension d'entrée et de la puissance de consigne.

L'unité de régulation comprend un second module de contrôle apte à déterminer un rapport cyclique de hachage de l'étage élévateur de tension en fonction de la tension à la sortie de l'étage abaisseur de tension, de la tension de la batterie, et de la différence entre l'intensité d'induction de consigne et l'intensité du courant traversant la bobine d'induction, pour asservir en boucle fermée l'intensité du courant traversant la batterie.

L'intensité d'induction de consigne est de préférence toujours supérieure à l'intensité traversant la batterie, et à l'intensité traversant la bobine d'induction.

Avantageusement, le second module de contrôle comprend un correcteur de type proportionnel intégral sur lequel est envoyée la différence entre l'intensité du courant traversant la bobine d'inductance et l'intensité d'inductance de consigne, et un moyen d'anti-emballement configuré pour désactiver la partie intégrante du correcteur si le rapport cyclique de hachage déterminé par le second module est égal, à une distance seuil près, des valeurs « 0 » ou « 1 ».

Selon un autre aspect, il est proposé un véhicule automobile à traction au moins partiellement électrique, comprenant une machine électrique couplée à des roues motrices et un étage onduleur apte à alimenter la machine électrique.

Selon une caractéristique générale, ledit véhicule comprend un dispositif de charge d'une batterie à partir d'un réseau monophasé tel que décrit ci-dessus, les connexions électriques et un interrupteur de l'étage élévateur de tension dudit dispositif étant compris dans l'étage onduleur, et la bobine d'induction dudit dispositif correspondant aux bobinages de ladite machine électrique.

Selon un autre aspect, il est proposé, dans un mode de mise en oeuvre, un procédé de commande de charge d'une batterie, notamment d'une batterie d'un véhicule automobile, à partir d'un réseau monophasé, dans lequel on filtre la tension d'entrée, on amène la puissance électrique du réseau à la batterie via un étage abaisseur de tension et un étage élévateur de tension couplé via un composant inductif tel qu'une bobine d'induction.

Selon une caractéristique générale, on compense le déphasage entre le courant d'entrée de l'étage abaisseur de tension et la tension d'entrée de l'étage abaisseur de tension.

De préférence, on régule le courant d'entrée de l'étage abaisseur de tension en commandant en boucle ouverte un rapport cyclique de hachage de l'étage abaisseur de tension en fonction de la tension du réseau d'alimentation monophasé, d'une puissance de consigne et de l'intensité du courant traversant la bobine d'induction pour compenser le déphasage entre le courant d'entrée de l'étage abaisseur de tension et la tension d'entrée de l'étage abaisseur de tension, et asservir la puissance reçue par la batterie à la puissance de consigne.

On peut également réguler l'intensité du courant traversant la batterie à une intensité de batterie de référence, en commandant en boucle fermée un rapport cyclique de hachage de l'étage élévateur de tension en fonction de la tension à la sortie de l'étage abaisseur de tension, de la tension de la batterie, et de la différence entre l'intensité d'induction de consigne et l'intensité du courant traversant la bobine d'induction.

On peut avantageusement désactiver la partie intégrante d'un correcteur de type proportionnel intégral si le rapport cyclique de hachage est égal, à une distance seuil près, aux valeurs « 0 » ou « 1 ».

D'autres avantages et caractéristiques de l'invention apparaîtront à l'examen de la description détaillée d'un mode de réalisation de l'invention, nullement limitatif, et des dessins annexés sur lesquels :

- la figure 1 illustre un dispositif de recharge selon un mode de réalisation de l'invention ;
- les figures 2a et 2b illustrent respectivement un premier et un deuxième modes de réalisation d'un premier module de contrôle ;
- la figure 3 présente de manière schématique un mode de réalisation d'un second module de contrôle ;
- la figure 4 présente une représentation graphique du courant traversant la bobine d'induction.

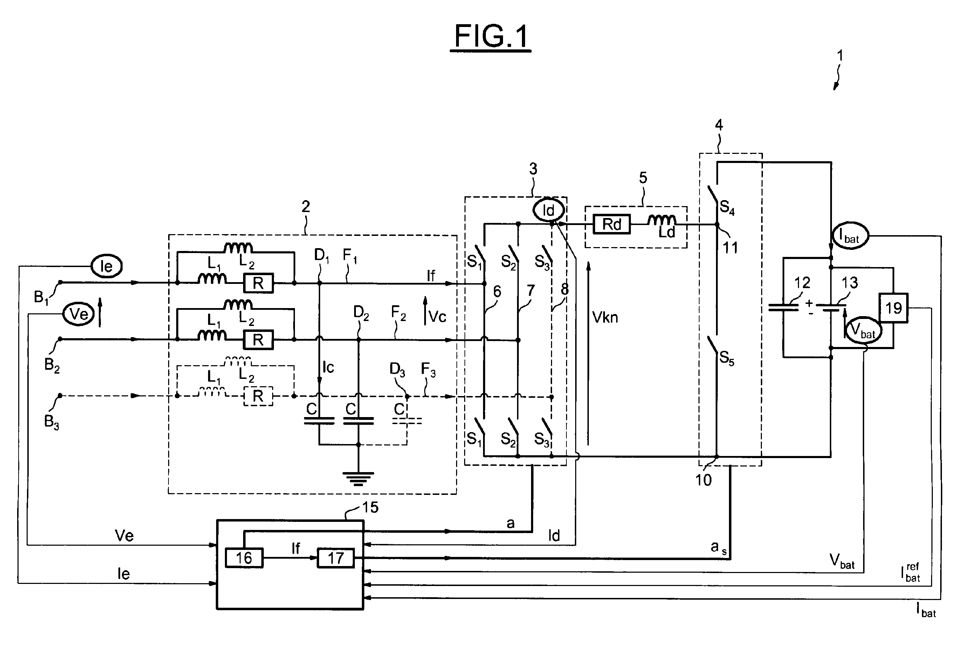

Sur la figure 1, est présenté de manière schématique un dispositif de charge d'une batterie d'un véhicule automobile à traction électrique à partir d'un réseau d'alimentation monophasé, selon un mode de réalisation.

Le dispositif de recharge 1 comprend un étage de filtrage 2, un étage abaisseur de tension 3 couplé à l'étage de filtrage 2, et un étage élévateur de tension 4 couplé à l'étage abaisseur de tension 3 via une machine électrique 5.

Le dispositif 1 pouvant être couplé à une alimentation aussi bien triphasée que monophasée, il comprend trois bornes $B_1$, $B_2$, $B_3$ couplées en entrée de l'étage de filtrage 2, et aptes à être couplées à un réseau d'alimentation. En recharge monophasée, seules les entrées $B_1$ et $B_2$ sont couplées à un réseau d'alimentation monophasé délivrant une tension d'entrée Ve et un courant d'entrée Ie.

Chaque borne d'entrée $B_1$, $B_2$ et $B_3$ est couplée à une branche de filtrage de l'étage de filtrage 2. Chaque branche de filtrage comprend deux branches en parallèle, portant l'une une inductance de valeur $L_2$ et l'autre portant en série une inductance de valeur $L_1$ et une résistance de valeur R.

Ces deux branches de filtrage sont chacune couplées en sortie à un condensateur de capacité C également couplé à la masse, en un point respectivement nommé $D_1$, $D_2$, $D_3$ pour chacune des branches de filtrage. L'ensemble des résistances de valeurs R, des inductances de valeurs $L_1$ ou $L_2$, et des condensateurs de capacité C constitue un filtre de type RLC à l'entrée de l'abaisseur de tension 3.

En recharge monophasée, la borne $B_3$ n'est pas couplée au réseau d'alimentation. La branche de filtrage couplée à la borne $B_3$ n'étant pas utilisée, celle-ci ne sera pas considérée dans la suite de la description et a été représentée en pointillés. Les autres éléments du circuit électrique représentés en pointillés sont des éléments qui ne sont utilisés que dans le cadre d'un couplage à un réseau d'alimentation triphasé.

L'étage abaisseur de tension 3 est couplé à l'étage de filtrage 2 par les points $D_1$ et $D_2$. L'abaisseur de tension 3, en fonctionnement avec une alimentation monophasée, comprend deux branches parallèles 6 et 7, portant chacune deux interrupteurs $S_1$ ou $S_2$ commandés par une unité de régulation 15.

Chaque entrée $D_1$ ou $D_2$ de l'abaisseur de tension est connectée, respectivement par une branche $F_1$ et $F_2$ à un point de connexion situé entre deux interrupteurs $S_1$ ou $S_2$ d'une même branche respectivement 6 et 7.

Les extrémités communes des branches 6 et 7 constituent deux bornes de sortie de l'abaisseur de tension 3. L'une des bornes est reliée à la borne « - » de la batterie 13 ainsi qu'à une première entrée 10 d'un élévateur de tension 4. L'autre de ces bornes est connectée à une première borne d'une machine électrique 5, dont l'autre borne est connectée à une seconde entrée 11 de l'élévateur de tension 4.

L'élévateur de tension 4 comprend deux interrupteurs $S_4$ et $S_5$ pilotables par l'unité de régulation 15 de manière indépendante. Ces deux interrupteurs $S_4$ et $S_5$ sont situés sur une branche reliant la première entrée 10 de l'élévateur de tension 4 et la borne « + » de la batterie 13. La seconde entrée 11 de l'élévateur de tension 4, à laquelle est connectée la machine électrique 5, est connectée entre les deux interrupteurs $S_4$ et $S_5$, l'interrupteur $S_4$ étant couplée entre la seconde entrée 11 et la borne « + » de la batterie 143, et l'interrupteur $S_5$ étant couplé entre la première entrée 10 et la seconde entrée 11.

Une machine électrique 5, assimilable à une résistance de valeur Rd disposée en série avec une bobine d'inductance Ld, est connectée entre la borne de sortie de l'abaisseur de tension 3 et la seconde entrée 11 de l'élévateur de tension 4. On ne sort pas du cadre de l'invention si l'on remplace la machine électrique 5 par une bobine d'inductance non résistive ou si l'on branche en série avec la machine électrique 5 une bobine d'induction supplémentaire.

Aux bornes de la batterie 13, est connecté un condensateur 12 destiné à maintenir relativement stable la tension aux bornes de la batterie 13, ainsi qu'un module 19 de suivi de charge de la batterie, apte à délivrer une valeur de consigne $I_{bat}^{ref}$ traduisant, en fonction du niveau de charge de la batterie, l'intensité optimale de courant à faire entrer par la borne « + » de la batterie 13. Le module 19 de suivi de charge transmet la valeur de consigne $I_{bat}^{ref}$ à l'unité de régulation 15 par une connexion dédiée.

Des moyens de mesure, intégrés ou non au module 19, transmettent par ailleurs à l'unité de régulation 15 une valeur $I_{bat}$ traduisant une intensité de courant mesurée entrant effectivement dans la batterie, et une valeur $V_{bat}$ traduisant la tension entre la borne « - » et la borne « + » de la batterie 13.

D'autres modules de mesure d'intensité de courant permettent de mesurer et transmettre à l'unité de régulation 15 la valeur Id de courant traversant la machine électrique 5, la valeur Ie d'intensité de courant du réseau d'alimentation entrant dans l'étage de filtrage 2, et la valeur Ve de tension d'entrée d'alimentation du réseau.

L'unité de régulation 15 comprend un premier module de contrôle 16 permettant de déterminer le rapport cyclique *a* de hachage de l'étage abaisseur de tension 3, et un second module de contrôle 17 permettant de déterminer une consigne de rapport cyclique $a_s$ de hachage de l'étage élévateur de tension 4.

L'unité de régulation 15 comprend pour cela deux modules pilotes (non représentés), apte pour le premier à imposer un motif temporel d'ouverture et de fermeture à chacun des interrupteurs de l'abaisseur de tension 3, de manière à obtenir le rapport cyclique de hachage a de l'étage abaisseur de tension 3, et apte pour le second à imposer un motif temporel d'ouverture et de fermeture à chacun des interrupteurs $S_4$ et $S_5$ de l'élévateur de tension 4, de manière à obtenir le rapport cyclique $a_s$.

Les interrupteurs sont de préférence des transistors permettant une commutation rapide, par exemple des transistors de type IGBT (Insulated Gate Bipolar Transistor).

Dans le cas d'une utilisation en monophasée uniquement, l'interrupteur $S_4$ disposé entre la seconde entrée 11 de l'élévateur de tension 4 et la borne « + » de la batterie 13 reste constamment fermé et peut par conséquent être remplacé par une diode passante dans un sens de circulation allant de ladite seconde entrée 1 1 à la borne « + » de la batterie 13. Dans le cas où le dispositif 1 peut être couplé aussi bien à un réseau d'alimentation monophasé qu'à un réseau d'alimentation triphasé, on peut coupler une diode en parallèle de l'interrupteur $S_4$ couplé entre ladite seconde entrée 11 et la borne « + » de la batterie 13, la diode étant passante dans un sens de circulation allant de ladite seconde entrée 11 à la borne « + » de la batterie 13.

Pour évaluer les rapports cycliques a et $a_s$, l'unité de régulation 15 reçoit en entrée les valeurs de la tension Ve d'alimentation du réseau, de l'intensité Id du courant traversant la machine électrique 5, de la tension $V_{bat}$ traversant la batterie 13, l'intensité $I_{bat}$ du courant traversant la batterie 13, et l'intensité de batterie de référence $I_{bat}^{ref}$ délivrée par le module 19 de suivi de charge.

A titre indicatif, les valeurs caractéristiques des éléments électriques du dispositif de charge 1 se trouvent dans les plages de valeurs suivantes :

- les capacités du filtre 2 représentent quelques centaines de $\mu$F, par exemple entre 100 et 500 $\mu$F chacune,
- la capacité 12 disposée aux bornes de la batterie 13 afin de stabiliser la tension des bornes, est de l'ordre du mF, par exemple entre 1 et 10 mF,
- les résistances de valeurs R du circuit de filtrage 2 sont de l'ordre de l'ohm, par exemple entre 1 et 10 $\Omega$,
- la résistance Rd du rotor de la machine électrique Me est de l'ordre de quelques dizaines de m$\Omega$, par exemple entre 0,01 $\Omega$ et 0,1 $\Omega$,
- les inductances L1, L2, Ld correspondant respectivement aux inductances de l'étage de filtrage 2 et au bobinage de la machine électrique 5, ont des valeurs de l'ordre de quelques dizaines de $\mu$H, par exemple des valeurs comprises entre 10 $\mu$H et 100 $\mu$H.

L'unité de régulation élabore à l'aide du premier module de contrôle 16 et du second module 17, des valeurs de consigne de rapport cyclique $a$ et $a_s$ de hachage pour l'abaisseur de tension 3 et pour l'élévateur de tension 4, permettant de satisfaire à trois objectifs :

- contrôler l'amplitude du courant If d'entrée de l'étage abaisseur de tension 3 et faire en sorte que ce courant If soit en phase avec la tension Ve d'entrée (ce contrôle à pour conséquences de minimiser le déphasage entre le courant If d'entrée de l'étage abaisseur de tension 3 et la tension $V_c$ d'entrée de l'étage abaisseur de tension 3), ce qui revient à asservir la puissance tirée au réseau d'alimentation,
- obtenir un courant mesuré entrant $I_{bat}$ par la borne « + » de la batterie 13, correspondant aux besoins d'alimentation de la batterie 13, ces besoins étant déterminés par le module 19 de suivi de charge et délivrés en tant que fonction $I_{bat}^{ref}$ à l'unité de régulation 15,
- éviter une annulation du courant Id transitant au travers de la bobine d'induction Ld de la machine électrique 5 afin de ne pas générer d'harmoniques indésirables au niveau du courant prélevé sur le réseau.

La chute de tension étant négligeable sur l'étage de filtrage 2 pour la plage de puissance de l'utilisation, il n'est pas nécessaire de décrire les équations du filtre d'entrée.
On considère que la tension Vc à l'entrée de l'étage abaisseur de tension 3 est égale à la tension d'entrée Ve du réseau d'alimentation.
La tension de sortie Vkn de l'étage abaisseur de tension 3 est égale à $a \cdot Ve$. Etant égale à $a \cdot Ve$, nous pouvons écrire l'équation de la branche portant la machine électrique 5, sous la forme :

$$Rd \cdot Id + Ld \cdot s \cdot Id = a \cdot Ve - a_s \cdot V_{bat} \qquad (\text{équation } 1)$$

où s représente l'opérateur de dérivation par rapport au temps « t », soit $\dfrac{d}{dt} = s$,

$a$ représente le rapport cyclique de hachage de l'étage abaisseur de tension 3, $a_s$ le rapport cyclique de l'étage élévateur de tension 4.

Le rapport cyclique $a$ de hachage de l'étage abaisseur de tension 3 peut également s'écrire a=If/Id, avec If le courant d'entrée dans l'étage élévateur de tension 3, et le rapport cyclique $a_s$ de hachage de l'étage élévateur de tension 4 est donné par $a_s$=I$_{batt}$/Id.
L'équation (1) peut donc également s'écrire sous la forme :

$$Rd \cdot Id + Ld \cdot s \cdot Id = \left(If \cdot Ve - I_{bat} \cdot V_{bat}\right)/Id \qquad (\text{équation } 2)$$

ou encore :

$$Rd \cdot Id^{\,2} + \frac{Ld}{2} \cdot s \cdot Id^2 = If \cdot Ve - I_{bat} \cdot V_{bat} \qquad (\text{équation } 3)$$

D'après l'équation 3, on peut donc utiliser l'intensité If du courant d'entrée de l'étage abaisseur de tension 3 comme variable de contrôle pour asservir le courant Id traversant la machine électrique 5 à une valeur de consigne Id$^{ref}$ qui sera élaborée de manière à ne pas permettre l'annulation du courant dans la bobine d'inductance Ld.
Lorsque la tension d'entrée Ve avoisine zéro, le système, même s'il est asservit, devient non commandable.

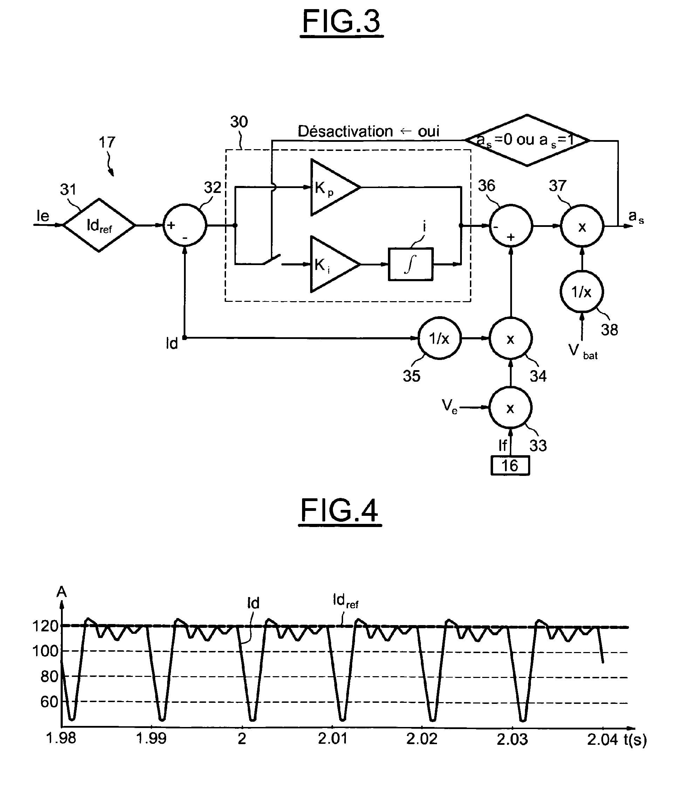

D'après les équations, pendant ces phases de non commandabilité le courant Id dans la bobine Ld de la machine électrique 5 ne peut que diminuer, comme cela est illustré sur la figure 4.

En divisant la valeur de l'intensité If du courant d'entrée de l'étage abaisseur de tension 3 par la valeur de l'intensité Id du courant mesuré au travers de la machine électrique 5, on obtient par définition la valeur du rapport cyclique *a* de hachage de l'étage abaisseur de tension 3. Le pilotage de l'étage abaisseur de tension 3, à l'aide de la consigne de rapport cyclique *a* de hachage, permet d'asservir le courant Ie d'alimentation du réseau sur une référence nulle, afin d'annuler le déphasage entre le courant et la tension en entrée de l'étage abaisseur de tension 3, et d'asservir le courant Id traversant la machine électrique 5 à la valeur de consigne souhaitée, soit l'intensité d'induction de consigne Id$^{ref}$.

La tension d'entrée Vc de l'étage abaisseur de tension 3, égale à la tension d'entrée Ve du réseau d'alimentation, est de la forme $Vc=Ve=Vm \sin(\omega t)$.

La commande assure que If soit en phase avec la tension d'entrée. Le courant d'entrée Ie est donné par Ie=If+Ic, c'est-à-dire $I_e=I_{fm} \sin(\omega t)+ C/2 \, V_m \cos(\omega t)$.

Le courant If est donc une image de la puissance active prise au réseau. Cette dernière est donnée par la relation $P_{active}=I_{fm} V_m/2$, où $I_{fm}=2 P_{active}/V_m$.

Si on régule le courant d'entrée Ie par le courant If d'entrée de l'étage abaisseur de tension 3 pour annuler le déphasage, et qu'on régule le courant Id traversant la machine électrique 5 par le courant If d'entrée de l'étage de l'abaisseur de tension 3 pour éviter l'annulation de courant dans la bobine Ld de la machine électrique 5, il reste alors à satisfaire le troisième objectif de la régulation effectuée par l'unité de régulation 15, relatif à l'asservissement du courant entrant dans la batterie I$_{bat}$ à la valeur de consigne I$_{bat}$$^{ref}$ délivrée par le module 19 de suivi de charge.

Pour cela on peut par exemple imposer un rapport cyclique de hachage $a_s$ à l'élévateur de tension de manière à respecter la relation $a_s=I_{bat}^{ref}/Id$.

La relation traduisant la dynamique du courant au travers de la machine électrique 5, donnée par l'équation (1) lie directement le rapport cyclique $a_s$ de l'étage élévateur 4 et le courant Id traversant la machine électrique 5.

Il est donc possible de piloter $a_s$ directement à partir de l'erreur entre une valeur de référence Id$^{ref}$ et la valeur mesurée Id traversant la machine électrique 5.

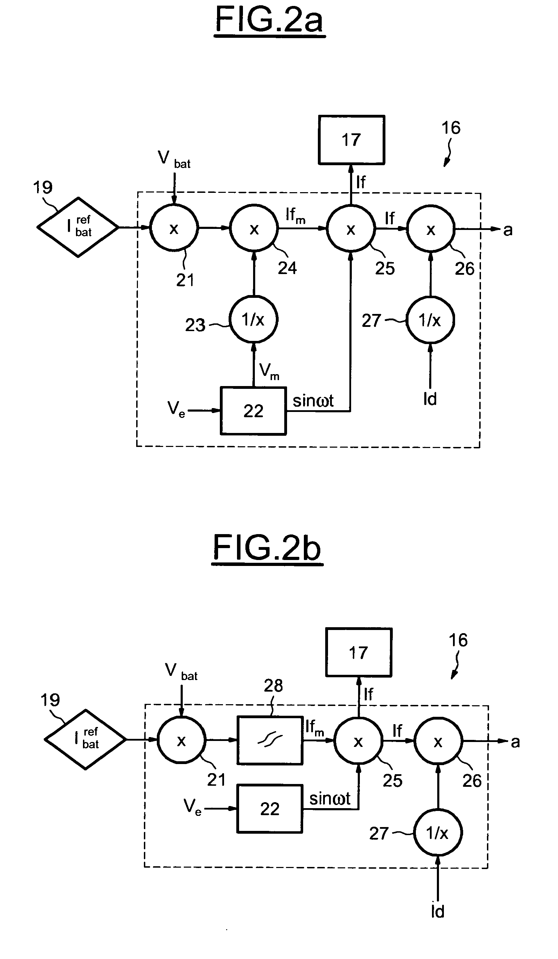

Sur la figure 2a, est représentée de manière schématique un premier mode de réalisation du premier module 16 de contrôle. Le premier module de contrôle comprend une régulation en boucle ouverte du courant d'entrée If de l'étage abaisseur de tension 3. La régulation du courant d'entrée If de l'étage abaisseur de tension 3 est réalisée en calculant le rapport cyclique *a* de hachage de l'abaisseur de tension 3.

Le rapport cyclique *a* de hachage de l'étage abaisseur de tension 3 est déterminé en fonction de la puissance de consigne P$_{bat}$$^{ref}$, déterminée à partir de la tension de la batterie V$_{bat}$ et de l'intensité de batterie de consigne I$_{batt}$$^{ref}$, de la tension d'entrée Ve du réseau d'alimentation monophasé et de l'intensité Id du courant traversant la bobine d'induction Ld.

Le premier module de contrôle 16 reçoit sur une première entrée la consigne d'intensité de batterie I$_{bat}$$^{ref}$ ainsi que, sur une deuxième entrée, la tension mesurée aux bornes de la batterie V$_{bat}$. L'intensité de consigne de la batterie I$_{bat}$$^{ref}$ et la tension V$_{bat}$ de la batterie sont délivrées en entrée d'un premier multiplicateur 21 qui délivre alors en sortie la puissance de consigne P$_{bat}$$^{ref}$.

Sur une troisième entrée, le module de contrôle 16 reçoit la tension d'entrée Ve du réseau d'alimentation. Le module 16 comprend un analyseur de signal 22 permettant d'extraire le signal d'amplitude normalisée V$_m$ proportionnel à la tension d'entrée Ve du réseau d'alimentation monophasé. Le signal d'amplitude V$_m$ est délivré à un premier inverseur 23 qui délivre en sortie l'inverse de l'amplitude V$_m$. L'inverse V$_m$ de cette amplitude est délivré à un second multiplicateur 24 qui reçoit également en entrée la puissance de consigne P$_{bat}$$^{ref}$.

Le second multiplicateur 24 délivre alors en sortie l'amplitude If$_m$ du courant d'entrée de l'étage abaisseur de tension 3 à un troisième multiplicateur 25 qui reçoit également en entrée le signal de phase $\sin(\omega t)$ de la tension d'entrée V$_e$ du réseau d'alimentation monophasé.

Le troisième multiplicateur 25 délivre alors en sortie le courant If d'entrée de l'étage abaisseur de sortie 3, d'une part, au second module 17 de contrôle et, d'autre part, à un quatrième multiplicateur 26. Le module 16 reçoit sur une quatrième entrée, la valeur Id de l'intensité du courant traversant la bobine Ld de la machine électrique 5. La valeur Id du courant traversant la bobine Ld est délivrée à un second inverseur 27 qui délivre en sortie l'inverse de l'intensité Id du courant traversant la bobine Ld au quatrième multiplicateur 26.

Le quatrième multiplicateur 26 effectue alors le calcul If/Id et délivre en sortie la valeur du rapport cyclique *a* de hachage de l'étage abaisseur de tension 3, permettant l'asservissement du courant d'entrée If de l'étage d'abaisseur de tension 3.

Sur la figure 2b, est illustré un second mode de réalisation du premier module 16 de contrôle.

Dans ce module 16, le deuxième multiplicateur 24 a été remplacé par une cartographie 28 délivrant l'amplitude If$_m$ du courant d'entrée If de l'étage abaisseur de tension 3 en fonction de l'amplitude V$_m$ de la tension d'entrée Ve et de la puissance de consigne P$_{bat}$$^{ref}$.

La figure 3 illustre un mode de réalisation du second module 17 de contrôle.

Dans le dispositif 1 de charge, la régulation du courant $I_{bat}$ traversant dans la batterie 13 est commandée par l'étage élévateur de tension 4. En effet, le courant $I_{bat}$ de la batterie est donné par la relation $I_{bat}=a_s I_d$.

Ainsi, pour asservir le courant $I_{bat}$ dans la batterie 13 à sa valeur de référence, il suffit de poser $a_s=I_{bat}{}^{ref}/Id$.

Il est également possible de rajouter une boucle de correction si la mesure de courant de la batterie est disponible. Dans ce cas, on obtient :

$$a_s = \frac{1}{Id} \cdot \left[ I_{bat}{}^{ref} + \alpha \cdot \left( I_{bat}{}^{ref} - I_{bat} \right) \right] \qquad (\text{équation } 4)$$

où $\alpha$ est un paramètre de réglage.

Le second module 17 de contrôle comprend une régulation en boucle fermée de l'intensité Id du courant traversant la bobine d'induction Ld de la machine électrique 5.

Le second module 17 de contrôle reçoit à une première entrée une valeur Ie de l'intensité d'entrée du réseau d'alimentation. Cette valeur Ie d'intensité est délivrée à un module 31 déterminant la valeur de l'intensité d'induction de consigne $Id^{ref}$. Le second module 17 de contrôle reçoit à une seconde entrée la valeur Id de l'intensité traversant la bobine Ld de la machine électrique 5. La valeur Id de l'intensité est délivrée à une entrée négative d'un premier soustracteur 32 qui reçoit à une entrée positive la valeur $Id^{ref}$ de l'intensité d'induction de consigne.

Le premier soustracteur 32 délivre alors en sortie la différence entre l'intensité Id du courant traversant la bobine d'inductance Ld et l'intensité d'inductance de consigne $I_d{}^{ref}$ à un correcteur 30 de type proportionnel intégral.

Le correcteur proportionnel intégral 30 comprend deux branches en parallèle, dont une première comporte un module $K_p$ de correction proportionnelle et une seconde comporte un module $K_i$ de correction intégrale et un module d'intégration i.

Le second module 17 de contrôle reçoit sur une troisième entrée la valeur If de l'intensité du courant en entrée de l'étage abaisseur de tension 3 délivrée par le premier module 16 de contrôle. L'intensité If est délivrée à un premier multiplicateur 33, qui reçoit également en entrée la tension d'entrée $V_e$ du réseau monophasé reçu sur une quatrième entrée du second module 17 de contrôle.

Le premier multiplicateur 33 délivre ainsi en sortie une valeur $P_{active}$ de la puissance active. Cette valeur $P_{active}$ est délivrée en entrée d'un second multiplicateur 34 qui reçoit également en entrée l'inverse du courant Id, le courant Id ayant été délivré à un premier inverseur 35 au préalable.

Le second multiplicateur 34 réalise le calcul $P_{active}/Id$ et délivre en sortie une valeur Vkn de la tension de sortie de l'étage abaisseur de tension 3. La tension Vkn de l'étage abaisseur de tension 3 est délivrée à une entrée positive d'un second soustracteur 36 qui reçoit sur une entrée négative la sortie du correcteur proportionnel intégral 30.

Le second soustracteur 36 délivre alors en sortie l'addition de la différence entre l'intensité Id du courant traversant la bobine d'inductance Ld et l'intensité d'inductance de consigne $I_d{}^{ref}$ corrigée par le correcteur proportionnel intégral 30, avec la tension Vkn de sortie de l'étage abaisseur de tension 3 en entrée d'un troisième multiplicateur 37. Le troisième multiplicateur 37 reçoit également en entrée l'inverse de la tension de batterie $V_{bat}$, la tension de batterie $V_{bat}$ ayant été reçue sur une cinquième entrée du second module 17 de contrôle et délivrée au préalable à un second inverseur 38.

Le troisième multiplicateur 37 délivre alors en sortie la valeur de consigne du rapport cyclique $a_s$ de hachage de l'étage élévateur de tension 4.

Le second module 17 de contrôle comprend également une boucle de rétroaction entre la sortie du troisième multiplicateur 37 et l'entrée de la branche du correcteur 30 proportionnel intégral comprenant le module de correction intégrale $K_i$.

Si la valeur du rapport cyclique $a_s$ de hachage de l'étage élévateur de tension 4 est égale à 0 ou 1 à un seuil près, la branche de correction intégrale est désactivée.

Cette boucle de rétroaction correspond à une technique d'anti-emballement utilisée pour palier la non commandabilité du dispositif lorsque la tension d'entrée Ve avoisine zéro. En effet, lors des phases de non commandabilité, la commande est saturée, c'est-à-dire que les rapports cycliques des interrupteurs, ou transistors IGBT, sont à 1, alors qu'elle n'est pas capable de diminuer l'écart. Pour éviter que cette erreur continue à être intégrée, la boucle de rétroaction est utilisée. De cette façon, dès que le dispositif est commandable le courant Id traversant la bobine Ld de la machine électrique 5 est ramené à la valeur de référence $Id^{ref}$.

L'utilisation de cette boucle de rétroaction permet également de commander un système qui possède une bobine Ld à très faible inductance. L'utilisation d'une bobine de faible inductance permet de réduire le volume du chargeur.

L'invention permet de fournir un dispositif de charge embarqué pour un véhicule automobile, adapté pour pouvoir être connecté à un réseau d'alimentation monophasé extérieur, intégrant dans son circuit le bobinage d'une machine électrique du véhicule, et permettant de réguler l'abaisseur de tension et l'élévateur de tension de sorte à garder un déphasage réduit entre le courant et la tension prélevés sur le réseau d'alimentation monophasé.

**Revendications**

1. Dispositif de charge d'une batterie (13), notamment une batterie d'un véhicule automobile à traction électrique, à partir d'un réseau d'alimentation monophasé, comprenant un étage de filtrage (2) destiné à être raccordé au réseau monophasé, un étage abaisseur de tension (3) raccordé à l'étage de filtrage (2), un étage élévateur de tension (4) destiné à être raccordé à la batterie (13) et couplé à l'étage abaisseur de tension (3) via un composant inductif ($L_d$) tel qu'une bobine d'induction, une unité de régulation (15) apte à imposer des rapports cycliques ($a$, $a_s$) de hachage à l'étage abaisseur de tension (3) et à l'étage élévateur de tension (4),
**caractérisé en ce que** l'unité de régulation (15) comprend des moyens de compensation du déphasage entre le courant d'entrée ($I_f$) de l'étage abaisseur de tension (3) et la tension d'entrée ($V_c$) de l'étage abaisseur de tension (3), l'unité de régulation (15) comprenant un premier module (16) de contrôle apte à déterminer en boucle ouverte un rapport cyclique ($a$) de hachage de l'étage abaisseur de tension (3) en fonction de la tension ($V_e$) du réseau d'alimentation monophasé, d'une puissance de consigne ($P_{bat}^{ref}$) et de l'intensité ($I_d$) du courant traversant le composant inductif ($L_d$), pour compenser le déphasage entre le courant d'entrée ($I_f$) de l'étage abaisseur de tension (3) et la tension d'entrée ($V_c$) de l'étage abaisseur de tension (3), et asservir la puissance ($P_{bat}$) reçue par la batterie à la puissance de consigne ($P_{bat}^{ref}$),
l'unité de régulation (15) comprenant un second module (17) de contrôle apte à déterminer un rapport cyclique ($a_s$) de hachage de l'étage élévateur de tension (4) en fonction de la tension ($V_{kn}$) à la sortie de l'étage abaisseur de tension (3), de la tension ($V_{bat}$) de la batterie (13), et de la différence entre l'intensité d'induction de consigne ($I_d^{ref}$) et l'intensité ($I_d$) du courant traversant le composant inductif ($L_d$), pour asservir en boucle fermée l'intensité ($I_{bat}$) du courant traversant la batterie (13).

2. Dispositif selon la revendication 1, dans lequel le premier module (16) de contrôle comprend une cartographie délivrant l'amplitude ($I_{fm}$) du courant d'entrée ($I_f$) de l'étage abaisseur de tension (3) en fonction de l'amplitude ($V_m$) de la tension d'entrée ($V_e$) et de la puissance de consigne ($P_{bat}^{ref}$).

3. Dispositif selon la revendication 1 ou 2, dans lequel l'intensité d'induction de consigne ($I_d^{ref}$) est toujours supérieure à l'intensité ($I_{bat}$) traversant la batterie (13) et à l'intensité ($I_d$) traversant le composant inductif ($L_d$).

4. Dispositif selon l'une quelconque des revendications 1 à 3, dans lequel le second module (17) de contrôle comprend un correcteur (30) de type proportionnel intégral sur lequel est envoyée la différence entre l'intensité ($I_d$) du courant traversant le composant inductif ($L_d$) et l'intensité d'inductance de consigne ($I_d^{ref}$), et un moyen d'anti emballement configuré pour désactiver la partie intégrante du correcteur (30) si le rapport cyclique ($a_s$) de hachage déterminé par le second module (17) est égal, à une distance seuil près, des valeurs 0 ou 1.

5. Véhicule automobile à traction au moins partiellement électrique, comprenant une machine électrique (5) couplée à des roues motrices et un étage onduleur apte à alimenter la machine électrique (5), **caractérisé en ce qu'**il comprend un dispositif selon l'une quelconque des revendications 1 à 4, les connexions électriques et un interrupteur de l'étage élévateur de tension (4) dudit dispositif étant compris dans l'étage onduleur, et le composant inductif (Ld) dudit dispositif correspondant aux bobinages de ladite machine électrique (5).

6. Procédé de commande de charge d'une batterie (13), notamment d'une batterie d'un véhicule automobile, à partir d'un réseau monophasé, dans lequel on filtre la tension d'entrée ($V_e$), on amène la puissance électrique du réseau à la batterie via un étage abaisseur de tension (3) et un étage élévateur de tension (4) couplé via un composant inductif ($L_d$) tel qu'une bobine d'induction,
**caractérisé en ce qu'**on compense le déphasage entre le courant d'entrée ($I_f$) de l'étage abaisseur de tension (3) et la tension d'entrée ($V_c$) de l'étage abaisseur de tension (3),
on régule le courant d'entrée ($I_f$) de l'étage abaisseur de tension (3) en commandant en boucle ouverte un rapport cyclique ($a$) de hachage de l'étage abaisseur de tension (3) en fonction de la tension ($V_e$) du réseau d'alimentation monophasé, d'une puissance de consigne ($P_{bat}^{ref}$) et de l'intensité ($I_d$) du courant traversant le composant inductif ($L_d$) pour compenser le déphasage entre le courant d'entrée ($I_f$) de l'étage abaisseur de tension (3) et la tension d'entrée ($V_c$) de l'étage abaisseur de tension (3), et asservir la puissance ($P_{bat}$) reçue par la batterie à la puissance de consigne ($P_{bat}^{ref}$),
et on régule l'intensité ($I_{bat}$) du courant traversant la batterie (13) à une intensité de batterie de référence ($I_{batt}^{ref}$) en commandant en boucle fermée un rapport cyclique ($a_s$) de hachage de l'étage élévateur de tension (4) en fonction

de la tension ($V_{kn}$) à la sortie de l'étage abaisseur de tension (3), de la tension ($V_{bat}$) de la batterie (13), et de la différence entre de l'intensité d'induction de consigne ($I_d^{ref}$) et l'intensité ($I_d$) du courant traversant le composant inductif ($L_d$).

7. Procédé selon la revendication 6, dans lequel on désactive la partie intégrante d'un correcteur de type proportionnel intégral si le rapport cyclique ($a_s$) de hachage est égal, à une distance seuil près, aux valeurs 0 ou 1.

**Patentansprüche**

1. Vorrichtung zum Laden einer Batterie (13), insbesondere einer Batterie eines Kraftfahrzeugs mit elektrischem Antrieb, ausgehend von einem einphasigen Versorgungsnetz, die eine Filterstufe (2), die dazu bestimmt ist, mit dem einphasigen Netz verbunden zu werden, eine Spannungsminderungsstufe (3), die mit der Filterstufe (2) verbunden ist, eine Spannungserhöhungsstufe (4), die dazu bestimmt ist, mit der Batterie (13) verbunden zu werden und mit der Spannungsminderungsstufe (3) über ein induktives Bauteil ($L_d$) wie eine Induktionsspule gekoppelt ist, und eine Regulierungseinheit (15) enthält, die der Spannungsminderungsstufe (3) und der Spannungserhöhungsstufe (4) zyklische Zerhackungsverhältnisse (a, $a_s$) aufzwingen kann, **dadurch gekennzeichnet, dass** die Regulierungseinheit (15) Einrichtungen zur Kompensation der Phasenverschiebung zwischen dem Eingangsstrom ($I_f$) der Spannungsminderungsstufe (3) und der Eingangsspannung ($V_c$) der Spannungsminderungsstufe (3) enthält, wobei die Regulierungseinheit (15) ein erstes Steuermodul (16) enthält, das in offener Schleife ein zyklisches Zerhackungsverhältnis (a) der Spannungsminderungsstufe (3) abhängig von der Spannung ($V_e$) des einphasigen Versorgungsnetzes, von einer Sollleistung ($P_{bat}^{ref}$) und von der Stärke ($I_d$) des das induktive Bauteil ($L_d$) durchquerenden Stroms bestimmen kann, um die Phasenverschiebung zwischen dem Eingangsstrom ($I_f$) der Spannungsminderungsstufe (3) und der Eingangsspannung ($V_c$) der Spannungsminderungsstufe (3) zu kompensieren und die von der Batterie empfangene Leistung ($P_{bat}$) auf die Sollleistung ($P_{bat}^{ref}$) zu regeln, wobei die Regulierungseinheit (15) ein zweites Steuermodul (17) enthält, das ein zyklisches Zerhackungsverhältnis ($a_s$) der Spannungserhöhungsstufe (4) abhängig von der Spannung ($V_{kn}$) am Ausgang der Spannungsminderungsstufe (3), der Spannung ($V_{bat}$) der Batterie (13) und der Differenz zwischen der Sollinduktionsstärke ($I_d^{ref}$) und der Stärke ($I_d$) des das induktive Bauteil ($L_d$) durchquerenden Stroms bestimmen kann, um die Stärke ($I_{bat}$) des die Batterie (13) durchquerenden Stroms in geschlossener Schleife zu regeln.

2. Vorrichtung nach Anspruch 1, wobei das erste Kontrollmodul (16) ein Kennfeld enthält, das die Amplitude ($I_{fm}$) des Eingangsstroms ($I_f$) der Spannungsminderungsstufe (3) abhängig von der Amplitude ($V_m$) der Eingangsspannung ($V_e$) und der Sollleistung ($P_{bat}^{ref}$) liefert.

3. Vorrichtung nach Anspruch 1 oder 2, wobei die Sollinduktionsstärke ($I_d^{ref}$) immer höher ist als die die Batterie (13) durchquerende Stärke ($I_{bat}$) und die das induktive Bauteil ($L_d$) durchquerende Stärke ($I_d$).

4. Vorrichtung nach einem der Ansprüche 1 bis 3, wobei das zweite Kontrollmodul (17) einen Korrektor (30) vom Proportional-Integral-Typ, an den die Differenz zwischen der Stärke ($I_d$) des das induktive Bauteil ($L_d$) durchquerenden Stroms und der Sollinduktivitätsstärke ($I_d^{ref}$) geschickt wird, und eine Einrichtung zum Verhindern von Überdrehzahlen enthält, die konfiguriert ist, den Bestandteil des Korrektors (30) zu deaktivieren, wenn das vom zweiten Modul (17) bestimmte zyklische Zerhackungsverhältnis ($a_s$) bis auf einen Schwellenabstand gleich den Werten 0 oder 1 ist.

5. Kraftfahrzeug mit zumindest teilweise elektrischem Antrieb, das eine mit Antriebsrädern gekoppelte elektrische Maschine (5) und eine Wechselrichterstufe enthält, die die elektrische Maschine (5) speisen kann, **dadurch gekennzeichnet, dass** es eine Vorrichtung nach einem der Ansprüche 1 bis 4 enthält, wobei die elektrischen Verbindungen und ein Unterbrecher der Spannungserhöhungsstufe (4) der Vorrichtung in der Wechselrichterstufe enthalten sind, und das induktive Bauteil ($L_d$) der Vorrichtung den Spulen der elektrischen Maschine (5) entspricht.

6. Ladesteuerungsverfahren einer Batterie (13), insbesondere einer Batterie eines Kraftfahrzeugs, ausgehend von einem einphasigen Netz, wobei die Eingangsspannung ($V_e$) gefiltert wird, die elektrische Leistung des Netzes zur Batterie über eine Spannungsminderungsstufe (3) und eine Spannungserhöhungsstufe (4) gebracht wird, die über ein induktives Bauteil ($L_d$) wie eine Induktionsspule gekoppelt ist, **dadurch gekennzeichnet, dass** die Phasenverschiebung zwischen dem Eingangsstrom ($I_f$) der Spannungsminderungsstufe (3) und der Eingangsspannung ($V_c$) der Spannungsminderungsstufe (3) kompensiert wird, der Eingangsstrom ($I_f$) der Spannungsminderungsstufe (3) reguliert wird, indem in offener Schleife ein zyklisches Zerhackungsverhältnis (a) der Spannungsminderungsstufe (3) abhängig von der Spannung ($V_e$) des einphasigen Versorgungsnetzes, von einer Sollleistung ($P_{bat}{}^{ref}$) und von der Stärke ($I_d$) des das induktive Bauteil ($L_d$) durchquerenden Stroms gesteuert wird, um die Phasenverschiebung zwischen dem Eingangsstrom ($I_f$) der Spannungsminderungsstufe (3) und der Eingangsspannung ($V_c$) der Spannungsminderungsstufe (3) zu kompensieren und die von der Batterie empfangene Leistung ($P_{bat}$) auf die Sollleistung ($P_{bat}{}^{ref}$) zu regeln,
und die Stärke ($I_{bat}$) des die Batterie (13) durchquerenden Stroms auf eine Bezugsbatteriestärke ($I_{batt}{}^{ref}$) reguliert wird, indem in geschlossener Schleife ein zyklisches Zerhackungsverhältnis ($a_s$) der Spannungserhöhungsstufe (4) abhängig von der Spannung ($V_{kn}$) am Ausgang der Spannungsminderungsstufe (3), von der Spannung ($V_{bat}$) der Batterie (13) und von der Differenz zwischen der Sollinduktionsstärke ($I_d{}^{ref}$) und der Stärke ($I_d$) des das induktive Bauteil ($L_d$) durchquerenden Stroms gesteuert wird.

7. Verfahren nach Anspruch 6, wobei der Bestandteil eines Korrektors vom Proportional-Integral-Typ deaktiviert wird, wenn das zyklische Zerhackungsverhältnis ($a_s$) bis auf einen Schwellenabstand gleich den Werten 0 oder 1 ist.

## Claims

1. Device for charging a battery (13), in particular a battery of an electric-traction motor vehicle, from a single-phase power supply network, comprising a filtering stage (2) intended to be connected to the single-phase network, a voltage step-down stage (3) connected to the filtering stage (2), a voltage step-up stage (4) intended to be connected to the battery (13) and coupled to the voltage step-down stage (3) via an inductive component ($L_d$) such as an inductance coil, a control unit (15) able to impose chopping duty cycles (a, $a_s$) on the voltage step-down stage (3) and the voltage step-up stage (4),
**characterized in that** the control unit (15) includes means for compensating for the phase shift between the input current ($I_f$) of the voltage step-down stage (3) and the input voltage ($V_c$) of the voltage step-down stage (3),
the control unit (15) including a first open-loop control module (16) able to determine a chopping duty cycle (a) of the voltage step-down stage (3) as a function of the voltage ($V_e$) of the single-phase power supply network, a setpoint power ($P_{bat}{}^{ref}$), and the intensity ($I_d$) of the current flowing through the inductive component ($L_d$), to compensate for the phase shift between the input current ($I_f$) of the voltage step-down stage (3) and the input voltage ($V_c$) of the voltage step-down stage (3), and to control the power ($P_{bat}$) received by the battery as a function of the setpoint power ($P_{bat}{}^{ref}$),
the control unit (15) including a second control module (17) able to determine a chopping duty cycle ($a_s$) of the voltage step-up stage (4) as a function of the voltage ($V_{kn}$) at the output of the voltage step-down stage (3), the voltage ($V_{bat}$) of the battery (13), and the difference between the setpoint induction intensity ($I_d{}^{ref}$) and the intensity ($I_d$) of the current flowing through the inductive component ($L_d$), providing closed-loop control of the intensity ($I_{bat}$) of the current flowing through the battery (13).

2. Device according to Claim 1, in which the first control module (16) includes a map providing the amplitude ($I_{fm}$) of the input current ($I_f$) of the voltage step-down stage (3) as a function of the amplitude ($V_m$) of the input voltage ($V_e$) and of the setpoint power ($P_{bat}{}^{ref}$).

3. Device according to Claim 1 or 2, in which the setpoint induction intensity ($I_d{}^{ref}$) is always greater than the intensity ($I_{bat}$) flowing through the battery (13) and the intensity ($I_d$) flowing through the inductive component ($L_d$).

4. Device according to any one of Claims 1 to 3, in which the second control module (17) includes a proportional-integral controller (30) to which is sent the difference between the intensity ($I_d$) of the current flowing through the inductive component ($L_d$) and the setpoint inductance intensity ($I_d{}^{ref}$), and overspeed protection means designed to deactivate the integral part of the controller (30) if the chopping duty cycle ($a_s$) determined by the second module (17) is approximately equal to "0" or "1".

5. Motor vehicle with at least partial electrical traction, including an electric machine (5) coupled to the drive wheels and an inverter stage able to power the electric machine (5), **characterized in that** it includes a device according to any one of Claims 1 to 4, the electrical connections and a switch of the voltage step-up stage (4) of said device being included in the inverter stage, and the inductive component (Ld) of said device being the windings of said electric machine (5).

6. Method for controlling the charging of a battery (13), in particular a battery of a motor vehicle, from a single-phase network, in which the input voltage ($V_e$) is filtered, the electrical power is taken from the network to the battery via a voltage step-down stage (3) and a voltage step-up stage (4) coupled via an inductive component ($L_d$) such as an inductance coil,

**characterized in that** the phase shift between the input current ($I_f$) of the voltage step-down stage (3) and the input voltage ($V_c$) of the voltage step-down stage (3) is compensated,

the input current ($I_f$) of the voltage step-down stage (3) is controlled via the open-loop control of a chopping duty cycle (a) of the voltage step-down stage (3) as a function of the voltage ($V_e$) of the single-phase power supply network, a setpoint power ($P_{bat}^{ref}$), and the intensity ($I_d$) of the current flowing through the inductive component ($L_d$), to compensate for the phase shift between the input current ($I_f$) of the voltage step-down stage (3) and the input voltage ($V_c$) of the voltage step-down stage (3), and to control the power ($P_{bat}$) received by the battery as a function of the setpoint power ($P_{bat}^{ref}$),

and the intensity ($I_{bat}$) of the current flowing through the battery (13) is locked to a reference battery intensity ($I_{batt}^{ref}$) via the closed-loop control of a chopping duty cycle ($a_s$) of the voltage step-up stage (4) as a function of the voltage ($V_{kn}$) at the output of the voltage step-down stage (3), the voltage ($V_{bat}$) of the battery (13), and the difference between the setpoint induction intensity ($I_d^{ref}$) and the intensity ($I_d$) of the current flowing through the inductive component ($L_d$).

7. Method according to Claim 6, in which the integral part of a proportional-integral controller is deactivated if the chopping duty cycle ($a_s$) is approximately equal to 0 or 1.

FIG.1

# FIG.2a

# FIG.2b

# FIG.3

# FIG.4

**EP 2 697 886 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2943188
- US 20070153560 A
- FR 2937803